Europäisches Patentamt

European Patent Office

Office européen des brevets

(19)

(11) Veröffentlichungsnummer: **0 432 742 A1**

## (12) EUROPÄISCHE PATENTANMELDUNG

(21) Anmeldenummer: 90123861.8

(22) Anmeldetag: 11.12.90

(51) Int. Cl.⁵ **B62M 11/12**

(30) Priorität: 12.12.89 DE 3940919

(43) Veröffentlichungstag der Anmeldung:
**19.06.91 Patentblatt 91/25**

(84) Benannte Vertragsstaaten:
**AT DE FR GB NL SE**

(71) Anmelder: **Fichtel & Sachs AG**
**Ernst-Sachs-Strasse 62**
**W-8720 Schweinfurt(DE)**

(72) Erfinder: **Schievelbusch, Ulrich, Prof.**
**Dipl.-Ing.**
**Helleböhnweg 13**
**W-3500 Kassel(DE)**

(74) Vertreter: **Liska, H., Dr.-Ing. et al**
**Möhlstrasse 22**
**W-8000 München 80(DE)**

(54) **Antriebsnabe für ein Fahrzeug.**

(57) Die Antriebsnabe für ein Fahrzeug, insbesondere ein Fahrrad, umfaßt eine Nabenachse (1), eine relativ zur Nabenachse (1) drehbare Nabenhülse (9) und einen drehbar auf der Nabenachse (1) gelagerten Antreiber (13). Der Antreiber (13) treibt die Nabenhülse (9) über ein Reibradgetriebe (17), dessen erste Toroidscheibe (25) fest auf der Nabenachse (1) sitzt, dessen mit mehreren Reibrädern (35) versehener Reibradträger (45) vom Antreiber (13) aus antreibbar ist und dessen zweite Toroidscheibe (27) über ein Planetenradgetriebe (21) und eine dem Planetenradgetriebe (21) nachgeschaltete Freilaufkupplung (23) mit der Nabenhülse (9) verbunden ist. Das stufenlos einstellbare Übersetzungsverhältnis des Reibradgetriebes (17) wird vom Inneren der Nabenachse (1) her über ein Gestänge (53) gesteuert, welches über einen Kupplungsring (47) die schwenkbar gelagerten Achszapfen (37) der Reibräder (35) mitnimmt. Die rotierende Toroidscheibe (27) ist über ein Schrägkugellager (31) am Druckring (33) einer Spreizkupplung (19) abgestützt, derart, daß die Spitze (71) des durch das Schrägkugellager (31) definierten Druckrichtungskegels (69) in der Nähe der Toroidscheibe (27) im Zentrum der Nabenachse (1) gelegen ist. Die Toroidscheibe (27) kann damit Kippbewegungen ausführen und sorgt für gleichmäßige Andruckkräfte der Reibräder (35).

Fig. 1

EP 0 432 742 A1

# ANTRIEBSNABE FÜR EIN FAHRZEUG

Die Erfindung betrifft eine Antriebsnabe für ein Fahrzeug und insbesondere eine Antriebsnabe mit einem Reibgetriebe, dessen Übersetzungsverhältnis stufenlos einstellbar ist.

Aus dem US-Patent 4 735 430 ist eine Antriebsnabe für ein Fahrrad bekannt, deren im Fahrradrahmen drehbar gelagerte Nabenhülse über ein in der Nabenhülse angeordnetes Reibradgetriebe mit einer von den Pedalen her rotierend angetriebenen Nabenachse angetrieben wird. Das Reibradgetriebe umfaßt zwei drehbar auf der Nabenachse gelagerte Toroidscheiben, die über mehrere Reibräder reibschlüssig miteinander gekuppelt sind. Die Reibräder sind an Achszapfen drehbar gelagert, die ihrerseits an einem stationären Reibradträger um Schwenkachsen schwenkbar sind, welche sich in Tangentialrichtung der Toroidscheiben erstrecken. Eine der beiden Toroidscheiben sitzt axial beweglich auf der Nabenachse und wird über eine mit Schrägschubflächen versehene Spreizkupplung gegen die Reibräder gepreßt, sobald die Nabenachse angetrieben wird. Die andere Toroidscheibe ist über ein Planetenradgetriebe und eine Freilaufkupplung mit der Nabenhülse gekuppelt. Zur stufenlosen Einstellung des Übersetzungsverhältnisses des Reibradgetriebes sind die Achszapfen der Reibräder nach radial außen verlängert und greifen in Schrägschubschlitze einer innerhalb der Nabenhülse angeordneten, das Reibradgetriebe drehbar umschließenden Steuerhülse. Durch Verdrehen der Steuerhülse mittels einer Zugseilanordnung kann die Winkellage der Reibräder relativ zur Nabenachse und damit das Übersetzungsverhältnis des Reibradgetriebes geändert werden.

Bei der bekannten Antriebsnabe ist die Nabenhülse über die Steuerhülse an einem Gehäuse des Reibradgetriebes radial geführt. Die Radlast erschwert hierbei das Einstellen des Übersetzungsverhältnisses. Da bei der bekannten Antriebsnabe beide Toroidscheiben beweglich geführt sein müssen, ergeben sich nicht nur Fertigungsprobleme, sondern es wird auch die Betriebssicherheit und Lebensdauer unerwünscht beeinflußt. Schließlich erfordert die bekannte Antriebsnabe spezielle Montagemittel, da die Nabenachse anders als bei herkömmlichen Antriebsnaben drehbar im Fahrradrahmen gelagert sein muß. Die axiale Fixierung der Nabenhülse relativ zu diesen Montagemitteln ist bei der bekannten Antriebsnabe für viele Anwendungsfälle nicht ausreichend. Schließlich sind für die Steuerung des Übersetzungsverhältnisses Sonderkonstruktionen eines Steuermechanismus erforderlich.

Es ist deshalb Aufgabe der Erfindung, eine Fahrzeug-Antriebsnabe anzugeben, deren Übersetzungsverhältnis stufenlos einstellbar ist. Die Antriebsnabe soll von einfacher und kostengünstig herzustellender Konstruktion sein. Ferner soll die Antriebsnabe einen dauerhaften Betrieb erlauben, und ihr Übersetzungsverhältnis soll mit einfachen Mitteln und leicht verstellbar sein. Die Erfindung geht von einer Antriebsnabe für ein Fahrzeug aus, die eine Nabenachse, eine die Nabenachse gleichachsig und relativ dazu drehbar umschließende Nabenhülse und einen relativ zur Nabenhülse drehbar gelagerten Antreiber aufweist. Innerhalb der Nabenhülse ist ein Reibradgetriebe angeordnet, welches zwei sich axial gegenüberliegende Toroidscheiben und mehrere in Umfangsrichtung der Toroidscheiben verteilte, die Toroidscheiben reibschlüssig miteinander kuppelnde Reibräder aufweist und im Kraftweg zwischen Antreiber und Nabenhülse angeordnet ist. Die Reibräder sind hierbei an Achszapfen drehbar gelagert, und die Achszapfen ihrerseits sind über in Umfangsrichtung der Toroidscheiben verlaufende Schwenkachsen schwenkbar an einem Reibradträger gelagert. Es ist wenigstens eine Kupplungseinrichtung vorgesehen, die bei vom Antrieb her erfolgendem Antrieb der Nabe den Kraftweg zwischen Antreiber und Nabenhülse schließt und bei nicht angetriebenem Antreiber den Kraftweg öffnet. Zur stufenlosen Einstellung des Übersetzungsverhältnisses des Reibradgetriebes ist eine manuell betätigbare, die Reibräder gemeinsam um die Schwenkachsen schwenkende Steuereinrichtung vorgesehen.

Die erfindungsgemäße Verbesserung besteht darin, daß der Antreiber nicht nur relativ zur Nabenhülse, sondern auch relativ zur Nabenachse drehbar gelagert ist, daß eine erste der beiden Toroidscheiben auf der vom Antreiber axial abgewandten Seite drehfest auf der Nabenachse angeordnet ist und die zweite Toroidscheibe mit der Nabenhülse zumindest in Antriebsdrehrichtung drehfest gekuppelt ist, daß der Reibradträger drehbar auf der Nabenachse gelagert ist und mit dem Antreiber in Antriebsverbindung steht und daß die Steuereinrichtung ein innerhalb der Nabenachse geführtes Gestänge und einen gelenkig mit den Achszapfen der Reibräder gekuppelten, auf der Nabenachse geführten und längs der Nabenachse mittels des Gestänges verschiebbaren Kupplungsring umfaßt. Bei dem Reibradgetriebe einer solchen Antriebsnabe muß lediglich eine einzige der beiden Toroidscheiben beweglich geführt werden, was den Betrieb behindernde Toleranzen verringert. Aufgrund seines im Betrieb um die Nabenachse rotierenden Reibradträgers kann der Wirkungsgrad des Reibradgetriebes verbessert werden. Die Steuerung des Übersetzungsverhältnisses erfolgt durch die Nabenachse hindurch ähnlich herkömmlichen Schaltgetriebenaben, wobei der Schaltmechanismus die Funktion des Reibradgetriebes und der Antriebsnabe nicht beeinträchtigt. Von Vorteil ist auch, daß die rotierende zweite Toroidscheibe im gleichen Drehsinn dreht wie der Antreiber und die Nabenhülse, so daß das Reibradgetriebe ohne zusätzliches Umkehrgetriebe eingesetzt werden kann.

Die erfindungsgemäße Antriebsnabe wird bevorzugt zum Antrieb von Fahrrädern eingesetzt, kann aber auch für Motorräder oder Sonderfahrzeuge, wie beispielsweise für selbstfahrende Rasenmäher, verwendet werden.

In einer bevorzugten Ausgestaltung ist die rotierende, zweite Toroidscheibe mittels eines als Schrägkugellager ausgebildeten Axialdrucklagers an einem Druckring drehbar gelagert, wobei das Schrägkugellager einen Druckrichtungskegel definiert, dessen Spitze in der Nähe der zweiten Toroidscheibe etwa im Zentrum der Nabenachse liegt. Der Druckring ist zusammen mit der zweiten Toroidscheibe längs der Nabenachse beweglich geführt, und die Kupplungseinrichtung umfaßt eine axial zwischen dem Druckring und dem Antreiber angeordnete Spreizkupplung mit beim Antrieb vom Antreiber her den Druckring und damit die zweite Toroidscheibe axial zur ersten Toroidscheibe hin treibenden Steigflächen.

Die Spreizkupplung sorgt dafür, daß mit wachsendem Antriebsdrehmoment des Antreibers auch die Anpreßkraft, mit der die Toroidscheiben an die Reibräder angedrückt werden, zunimmt. Durch geeignete Wahl des Neigungswinkels der Steigflächen läßt sich die Andruckkraft etwa proportional zum eingeleiteten Drehmoment verstärken. Die einander gegenüberliegenden Steigflächen der Spreizkupplung können gleitend aneinanderliegen; es können aber auch, wie dies beispielsweise in dem US-Patent 4 735 430 beschrieben ist, Kugeln zur Gleitverbesserung zwischengeschaltet sein. Die Spreizkupplung kann so ausgebildet sein, daß sie bei fehlendem Antrieb des Antreibers die zweite Toroidscheibe von den Reibrädern löst und damit die Nabenhülse vom Antreiber abkuppelt. Alternativ kann die Spreizkupplung aber auch federnd in die Eingriffsstellung von zweiter Toroidscheibe und Reibrädern vorgespannt sein, so daß sie lediglich für eine Verstärkung der kontinuierlich bestehenden Reibantriebsverbindung sorgt. In dieser Variante ist jedoch im Kraftweg zwischen der zweiten Toroidscheibe und der Nabenhülse zweckmäßigerweise eine Einwegkupplung, insbesondere eine Klinken-Einwegkupplung, vorgesehen, um sicherzustellen, daß bei stehendem Antreiber, jedoch rotierender Nabenhülse, das Reibradgetriebe in Ruhe bleibt.

Das als Schrägkugellager ausgebildete Axialdrucklager zwischen zweiter Toroidscheibe und dem Druckring erlaubt eine geringfügig kippbewegliche Führung der zweiten Toroidscheibe. Die zweite Toroidscheibe wird damit mit gleichem Anpreßdruck an sämtliche Reibräder angelegt, insbesondere, wenn drei mit gleichen Winkelabständen voneinander angeordnete Reibräder vorgesehen sind. Die im Zentrum der Nabenachse gelegene Spitze des Druckrichtungskegels des Schrägkugellagers bildet hierbei den momentanen Pol der Kippbewegung, die es der zweiten Toroidscheibe ermöglicht, Lager- und Formtoleranzen der beiden Toroidscheiben und der Reibräder auszugleichen. Das Reibradgetriebe zeichnet sich deshalb durch einen besonders gleichmäßigen Lauf aus.

Der zweckmäßigerweise auf der Nabenachse gelagerte Antreiber ist über eine ebenfalls drehbar auf der Nabenachse gelagerte Kupplungshülse mit dem Reibradträger gekuppelt. Die zweite Toroidscheibe umschließt hierbei diese Kupplungshülse. Die Kupplungshülse kann direkt mit dem Antreiber gekuppelt sein, verbindet aber zur Begrenzung ihrer axialen Länge den Reibradträger zweckmäßigerweise mit dem von der Spreizkupplung axial verstellbaren und vom Antreiber her rotierend mitgenommenen Druckring. Für die drehfeste Kupplung der Kupplungshülse sowohl mit dem Druckring als auch mit dem Reibradträger sind zweckmäßigerweise Verzahnungen vorgesehen, die nicht nur eine Axialbewegung der miteinander gekuppelten Teile zulassen, sondern auch eine geringfügige Kippbewegung. Geeignet sind hierzu Evolventenverzahnungen an beiden Enden der Kupplungshülse.

Ein Reibradgetriebe der vorstehend erläuterten Art erhöht die Drehzahl der Nabenhülse relativ zur Drehzahl des Antreibers in jeder Winkelstellung der Reibräder bezogen auf ihre Schwenkachse. Dies kann für manche Anwendungsfälle erwünscht sein, beispielsweise bei Sonderfahrzeugen mit besonders kleinen Rädern. Insbesondere bei Fahrrädern ist es jedoch erwünscht, wenn nicht nur Übersetzungsverhältnisse, sondern auch Untersetzungsverhältnisse eingestellt werden können. Um dies zu erreichen, ist in einer bevorzugten Ausgestaltung vorgesehen, daß innerhalb der Nabenhülse ein Planetenradgetriebe angeordnet ist, dessen Hohlrad mit der ersten Toroidscheibe verbunden ist, dessen Sonnenrad mit der zweiten Toroidscheibe verbunden ist und dessen mit dem Hohlrad und dem Sonnenrad kämmende Planetenräder an einen mit der Nabenhülse verbundenen, um die Nabenachse drehbaren Planetenradträger gelagert sind. Während das Reibradgetriebe die Antriebsdrehzahl des Antreibers ins Schnelle übersetzt, so übersetzt das Planetenradgetriebe die Antriebsdrehzahl zurück ins Langsame und zwar zweckmäßigerweise so, daß in einer mittleren Schwenkstellung der Reibräder die Drehzahl der Nabenhülse gleich der Drehzahl des Antreibers ist.

Zu einer vergleichsweise kompakten Antriebsnabe gelangt man, wenn das Planetengetriebe auf der dem Antreiber axial zugewandten Seite der zweiten Toroidscheibe angeordnet ist und das Hohlrad die Form einer über die zweite Toroidscheibe hinweg zur ersten Toroidscheibe sich erstreckenden Hülse hat. Das Planetenradgetriebe kann damit platzsparend in dem radial zwischen Nabenhülse und Spreizkupplung verbleibenden Ringraum untergebracht werden. In diesem Raum läßt sich darüber hinaus auch die vorstehend erwähnte Freilaufkupplung unterbringen, und zwar auch dann, wenn im Einzelfall kein Planetenradgetriebe vorgesehen sein sollte.

Bei der Freilaufkupplung handelt es sich zweckmäßigerweise um eine Klinken-Freilaufkupplung, die mit einer ihrer Kupplungshälften, insbesondere ihrer Klinkenverzahnung, an der zweiten Toroidscheibe geführt ist und ihrer anderen Kupplungshälfte, insbesondere ihrem Klinkenträger, drehbar an dem die zweite Toroidscheibe drehbar führenden Druckring gelagert und mit der Nabenhülse gekuppelt ist. Da der Druckring und die zweite Toroidscheibe ebenfalls aneinander gelagert sind, insbesondere über das vorstehend erwähnte Schrägkugellager, werden die Komponenten der Freilaufkupplung auf einfache Weise ebenfalls zueinander ausgerichtet.

Der auf der Nabenachse verschiebbare Kupplungsring des das Übersetzungsverhältnis steuernden Steuermechanismus umfaßt zweckmäßigerweise zwei insbesondere über ein Kugellager aneinander drehbar, aber axial fest gelagerte Ringe. Während ein erster der beiden Ringe lediglich entsprechend der Steuerbewegung des in der Nabenachse verschiebbaren Gestänges auf der Nabenachse axial verschoben wird, rotiert der zweite Ring zusammen mit dem Reibradträger um die Nabenachse. Die Achszapfen der Reibräder sind gelenkig, insbesondere über Kugelgelenke mit dem zweiten Ring verbunden.

Im folgenden wird ein Ausführungsbeispiel der Erfindung anhand einer Zeichnung näher erläutert. Hierbei zeigt:

Fig. 1    einen Axiallängsschnitt durch eine Antriebsnabe eines Fahrrads und

Fig. 2    einen Axialquerschnitt durch die Antriebsnabe, gesehen entlang einer Linie II-II in Fig. 1.

Die in den Figuren dargestellte Antriebsnabe umfaßt eine drehfest am Rahmen des Fahrrads zu befestigende Nabenachse 1, an der in nachstehend noch näher erläuterter Weise über Kugellager 3, 5 eine mit Speichenflanschen 7 versehene Nabenhülse 9 drehbar gelagert ist. Axial seitlich der Nabenhülse 9 ist auf der Nabenachse 1 ein mit einem Kettenzahnrad 11 versehener Antreiber 13 mittels eines Nadellagers 15 drehbar gelagert. Innerhalb der Nabenhülse 9 ist ein Reibradgetriebe 17 angeordnet, das über eine Spreizkupplung 19 mit dem Antreiber 13 und über Planetenradgetriebe 21 sowie eine dem Planetenradgetriebe 21 nachgeschaltete Klinkenfreilaufkupplung 23 mit der Nabenhülse 9 gekuppelt ist. Das Antriebsdrehmoment des Antreibers 13 wird über die Spreizkupplung, das Reibradgetriebe 17, das Planetenradgetriebe 21 und die Freilaufkupplung 23 zur Nabenhülse 9 übertragen. Von der Nabenhülse 9 her rührende Drehmomente, wie sie beispielsweise während der Fahrt bei stillstehendem Antreiber 13 auftreten können, werden von der Freilaufkupplung 23 vom gesamten Getriebe ferngehalten, welches bei stehendem Antreiber 13 damit ebenfalls stillsteht.

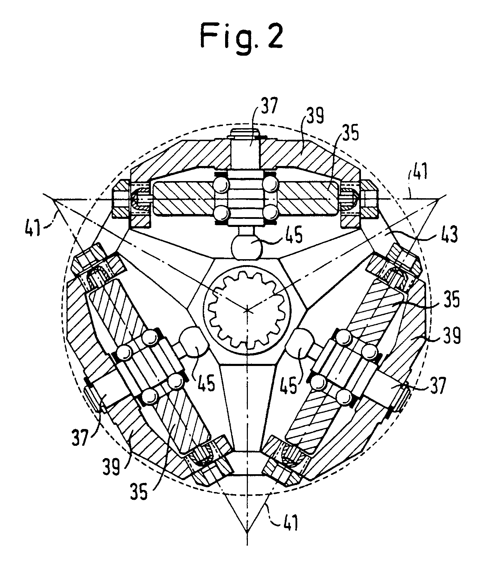

Das die Drehzahl des Antreibers 13 ins Schnelle übersetzende Übersetzungsverhältnis des Reibradgetriebes 17 ist stufenlos einstellbar. Das Reibradgetriebe 17 umfaßt zwei mit axialem Abstand voneinander angeordnete Toroidscheiben 25, 27, von denen die Toroidscheibe 25 fest auf der Nabenachse 1 gehalten ist und an einem Ansatz 29 zugleich das Lager 3 der Nabenhülse 9 trägt. Die andere Toroidscheibe 27 ist drehbar und axial beweglich über ein Schrägkugellager 31 an einem Druckring 33 der Spreizkupplung 19 geführt. Zwischen den beiden Toroidscheiben 25, 27 sind drei um 120° gegeneinander winkelversetzte Reibräder 35 angeordnet, die die Toroidscheiben 25, 27 reibschlüssig miteinander kuppeln. Jedes der Reibräder 35 ist an einem Achszapfen 37 drehbar gelagert, dessen Drehachse die Längsachse der Nabenachse 1 schneidet. Wie am besten Fig. 2 zeigt, sind die Achszapfen 37 an Zwischenträgern 39 gehalten, die ihrerseits um Schwenkachsen 41 schwenkbar an einem gemeinsamen, drehbar an der Nabenachse 1 gelagerten Reibradträger 43 gelagert sind. Die Schwenkachsen 41 liegen in einer gemeinsamen, senkrecht zur Nabenachse 1 verlaufenden Ebene, haben gleichen Abstand von der Nabenachse 1 und erstrecken sich in tangentialer Richtung relativ zu dieser.

Die radial nach innen ragenden Enden der Achszapfen 37 sind jeweils mit einem Kugelkopf 45 versehen, über den sie gelenkig mit einem die Nabenachse 1 umschließenden Kupplungsring 47 verbunden sind. Die Kugelköpfe 45 greifen hierbei in radiale Taschen des Kupplungsrings 47. Der Kupplungsring 47 ist über ein Kugellager 49 mit einem auf der Nabenachse 1 axial verschiebbar geführten Kupplungsring 51 verbunden und überträgt die Steuerbewegung eines zentrisch in der Nabenachse 1 verschiebbar geführten Steuergestänges 53 auf den Kupplungsring 47. Das Steuergestänge 53 ist über nicht dargestellte Stellorgane verschiebbar und trägt einen Steuerklotz 55, der durch eine Öffnung 57 der Nabenachse 1 hindurch und in den Kupplungsring 51 hineinreicht. Durch axiales Verschieben des Gestänges 53 werden die Reibräder 35 gemeinsam um ihre Schwenkachsen 41 geschwenkt, womit das Verhältnis des Laufbahndurchmessers $d_1$ der Toroidscheibe 25 zum Laufbahndurchmesser $d_2$ der Toroidscheibe 27 stufenlos verstellt werden kann. Nachdem das Reibradgetriebe 17 vom Antreiber 13 her über den Reibradträger 43 in noch nachstehend erläuterter Weise angetrieben wird, läuft die Toroidscheibe 27 stets mit größerer Drehzahl um als der Reibradträger 43. Das Verhältnis der Drehzahl $n_2$ der Toroidscheibe 27 zur Drehzahl $n_1$ des Reibradträgers 43 ergibt sich nach der Gleichung zu

$$n_2/n_1 = 1 + d_1/d_2.$$

Die Spreizkupplung 19 sorgt dafür, daß mit wachsendem Drehmoment des Antreibers 13 die axiale Andruckkraft der Toroidscheibe 27 angenähert proportional zunimmt. Die Spreizkupplung 19 führt den Druckring 33 über Kugeln 59 an einem Gegendruckring 61, der über Verzahnungen 63 seinerseits drehfest mit dem Antreiber 13 gekuppelt ist. Die Kugeln 59 sind zwischen Schrägflächen geführt, die bei einer Drehung des Antreibers 13 in Antriebsrichtung den Druckring 33 und damit die Toroidscheibe 27 auf die Reibräder 35 zu spannt. Für einen vorbestimmten Anfangsdruck sorgen Druckfedern 65 zwischen dem Antreiber 13 und dem Gegendruckring 61.

Das von der Spreizkupplung 13 übertragene Drehmoment wird von einer drehbar und axial beweglich auf der Nabenachse 1 geführten Kupplungshülse 67 vom Druckring 33 auf den Reibradträger 45 übertragen. Die Toroidscheibe 27 umschließt hierbei die Kupplungshülse 67. An beiden Enden der Kupplungshülse 67 sind Verzahnungen für eine drehfeste Verbindung mit dem Druckring 33 einerseits und dem Reibradträger 45 andererseits vorgesehen. Die Verzahnungen sind so ausgebildet, daß sie geringfügige Kippbewegungen der miteinander gekuppelten Komponenten zulassen. Zweckmäßigerweise handelt es sich um Evolventenverzahnungen.

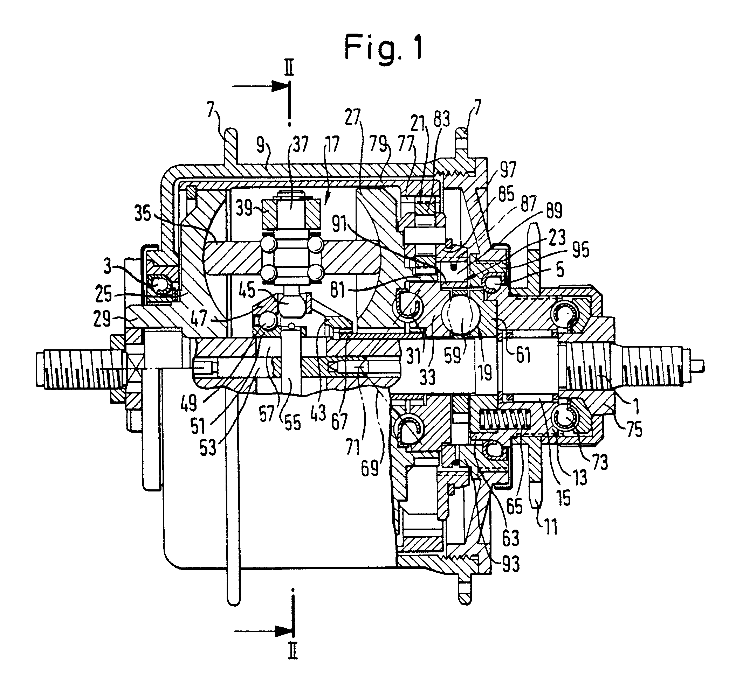

Das die Axialkräfte des Druckrings 33 auf die Toroidscheibe 27 übertragende Schrägkugellager 31 definiert, wie Fig. 1 bei 69 andeutet, einen Druckrichtungskegel, dessen Spitze 71 in der Nähe der Toroidscheibe 27 im Zentrum der Nabenachse 1 liegt. Die Toroidscheibe 27 kann damit Kippbewegungen um die Spitze 71 als Pol ausführen und sorgt so für gleichmäßige Anpreßkräfte der Reibräder 35. Die Reaktionskräfte der Spreizkupplung 13 werden von einem Axialdrucklager 73 aufgenommen, über das sich der Antreiber 13 an einem auf die Nabenachse 1 aufgeschraubten Festkonus 75 abstützt.

Das Planetenradgetriebe 21 mindert die vom Reibradgetriebe 17 ins Schnelle übersetzte Drehzahl erneut ins Langsamere. Es ist auf der dem Antreiber 13 axial zugewandten Seite der Toroidscheibe 27 angeordnet und umfaßt eine Hohlradverzahnung 77 an einer das Reibradgetriebe 17 umschließenden und mit der Toroidscheibe 25 drehfest verbundenen Hülse 79, ein an der Toroidscheibe 27 integral angeformtes Sonnenrad 81 und mit dem Sonnenrad 81 und der Hohlradverzahnung 77 kämmende Planetenräder 83, deren Planetenradträger 85 an der Toroidscheibe 27 drehbar geführt ist. Der Planetenradträger 85 trägt auf der zum Antreiber 13 axial weisenden Seite einen mit einer Klinkenverzahnung 87 der Freilaufkupplung 23 versehenen Ringansatz. Radial innerhalb des Ringansatzes ist auf dem Druckring 33 ein mit Klinken 89 versehener Klinkenträger 91 der Freilaufkupplung 23 gelagert. Der Klinkenträger 91 ist über eine Verzahnung 93 mit einem Außenring 95 des Kugellagers 5 der Nabenhülse 9 drehfest gekuppelt und überträgt bei Drehung des Planetenradträgers 85 in Antriebsrichtung das Drehmoment auf die Nabenhülse 9, die zu diesem Zweck mit einem drehfest auf dem Außenring 95 sitzenden Schraubdeckel 97 verschlossen ist. Das Kugellager 5 ist hierbei an dem Antreiber 13 radial gelagert. Der Schraubdeckel 97 verschließt die Nabenhülse nach außen hin.

Das Untersetzungsverhältnis des Planetenradgetriebes 21 kann so gewählt sein, daß die Ausgangsdrehzahl der Nabenhülse 9 abhängig von der Schwenkstellung der Achszapfen 37 der Reibräder 35 sowohl größer als auch kleiner als die Eingangsdrehzahl des Antreibers 13 eingestellt werden kann.

## Ansprüche

1. Antriebsnabe für ein Fahrzeug, umfassend
   - eine Nabenachse (1)
   - eine die Nabenachse (1) gleichachsig und relativ dazu drehbar umschließende Nabenhülse (9),
   - einen relativ zur Nabenhülse (9) drehbar gelagerten Antreiber (13),
   - ein innerhalb der Nabenhülse (9) angeordnetes Reibradgetriebe (17), welches zwei sich axial gegenüberliegende Toroidscheiben (25, 27) und mehrere in Umfangsrichtung der Toroidscheiben (25, 27) verteilte, die Toroidscheiben (25, 27) reibschlüssig miteinander kuppelnde Reibräder (35) aufweist und im Kraftweg zwischen Antreiber (13) und Nabenhülse (9) angeordnet ist, wobei die Reibräder (35) an Achszapfen (37) drehbar gelagert sind und die Achszapfen (37) ihrerseits über in Umfangsrichtung der Toroidscheiben (25, 27) verlaufende Schwenkachsen (41) schwenkbar an einem Reibradträger (43) gelagert sind,
- wenigstens eine bei vom Antreiber (13) her erfolgendem Antrieb der Nabe den Kraftweg zwischen Antreiber (13) und Nabenhülse (9) schließende, bei nicht angetriebenem Antreiber (13) den Kraftweg öffnende Kupplungseinrichtung (23),
- eine manuell betätigbare, die Reibräder (35) zur stufenlosen Einstellung des Übersetzungsverhältnisses des Reibradgetriebes (17) gemeinsam um die Schwenkachsen (41) schwenkende Steuereinrichtung (47, 51, 53),
dadurch gekennzeichnet, daß der Antreiber (13) auch relativ zur Nabenachse (1) drehbar gelagert ist, daß eine erste (25) der beiden Toroidscheiben (25, 27) auf der vom Antreiber (13) axial abgewandten Seite der zweiten (27) der beiden Toroidscheiben fest auf der Nabenachse (1) angeordnet ist und die zweite Toroidscheibe (27) mit der Nabenhülse (9) zumindest in Antriebsdrehrichtung drehfest gekuppelt ist,
daß der Reibradträger (43) drehbar auf der Nabenachse (1) gelagert ist und mit dem Antreiber (13) in Antriebsverbindung steht und
daß die Steuereinrichtung (47, 51, 53) ein innerhalb der Nabenachse (1) geführtes Gestänge (53) und einen gelenkig mit den Achszapfen (37) der Reibräder gekuppelten, auf der Nabenachse (1) geführten und längs der Nabenachse (1) mittels des Gestänges (53) verschiebbaren Kupplungsring (47, 51) umfaßt.

2. Antriebsnabe nach Anspruch 1, dadurch gekennzeichnet, daß die zweite Toroidscheibe (27) mittels eines als Schrägkugellager (31) ausgebildeten Axialdrucklagers an einem Druckring (33) drehbar gelagert ist, wobei das Schrägkugellager (31) einen Druckrichtungskegel (69) definiert, dessen Spitze (71) in der Nähe der zweiten Toroidscheibe (27) etwa im Zentrum der Nabenachse (1) liegt, daß der Druckring (33) zusammen mit der zweiten Toroidscheibe (27) längs der Nabenachse (1) beweglich geführt ist und daß die Kupplungseinrichtung eine axial zwischen dem Druckring (33) und dem Antreiber (13) angeordnete Spreizkupplung (19) mit beim Antrieb vom Antreiber (13) her den Druckring (33) und damit die zweite Toroidscheibe (27) axial zur ersten Toroidscheibe (25) hin treibenden Steigflächen aufweist.

3. Antriebsnabe nach Anspruch 2, dadurch gekennzeichnet, daß die zweite Toroidscheibe (27) eine drehbar auf der Nabenachse (1) gelagerte, vom Antreiber (13) her antreibbare, mit dem Reibradträger (43) drehfest gekuppelte Kupplungshülse (67) umschließt.

4. Antriebsnabe nach Anspruch 3, dadurch gekennzeichnet, daß die Kupplungshülse (67) mit dem Druckring (33) drehfest gekuppelt ist.

5. Antriebsnabe nach Anspruch 3 oder 4, dadurch gekennzeichnet, daß die Kupplungshülse (67) an beiden Enden Evolventenverzahnungen für die Antriebsverbindung aufweist.

6. Antriebsnabe nach einem der Ansprüche 1 bis 5, dadurch gekennzeichnet, daß innerhalb der Nabenhülse (9) ein Planetenradgetriebe (21) angeordnet ist, dessen Hohlrad (77) mit der ersten Toroidscheibe (25) verbunden ist, dessen Sonnenrad (81) mit der zweiten Toroidscheibe (27) verbunden ist und dessen mit dem Hohlrad (77) und dem Sonnenrad (81) kämmende Planetenräder (83) an einem mit der Nabenhülse (9) gekuppelten, um die Nabenachse (1) drehbaren Planetenradträger (85) gelagert sind.

7. Antriebsnabe nach Anspruch 6, dadurch gekennzeichnet, daß das Planetengetriebe (21) auf der dem Antreiber (13) axial zugewandten Seite der zweiten Toroidscheibe (27) angeordnet ist und das Hohlrad (77) die Form einer über die zweite Toroidscheibe (27) hinweg zur ersten Toroidscheibe (25) sich erstreckenden Hülse (79) hat.

8. Antriebsnabe nach einem der Ansprüche 1 bis 7, dadurch gekennzeichnet, daß die Kupplungseinrichtung eine Freilaufkupplung (23) in einer Antriebsverbindung zwischen der zweiten Toroidscheibe (27) und der Nabenhülse (9) aufweist.

9. Antriebsnabe nach Anspruch 8, dadurch gekennzeichnet, daß die Freilaufkupplung als Klinken-Freilaufkupplung (23) ausgebildet ist und auf der dem Antreiber (13) axial zugewandten Seite der zweiten Toroidscheibe (27) angeordnet ist, mit einer ihrer Kupplungshälften, insbesondere ihrer Klinkenverzahnung (87), an der zweiten Toroidscheibe (27) geführt ist und mit ihrer anderen Kupplungshälfte, insbesondere ihrem Klinkenträger (91), drehbar an einem die zweite Toroidscheibe (27) drehbar führenden Druckring (33) gelagert und mit
der Nabenhülse (9) gekuppelt ist.

10. Antriebsnabe nach Anspruch 8 oder 9, dadurch
gekennzeichnet, daß auf der dem Antreiber
(13) axial zugewandten Seite der zweiten Toroidscheibe (27) ein Planetengetriebe (21) angeordnet ist, dessen Ausgangsteil, insbesondere dessen Planetenradträger (85), über die
Freilaufkupplung (21) mit der Nabenhülse (9)
verbunden ist.

11. Antriebsnabe nach einem der Ansprüche 1 bis
10, dadurch gekennzeichnet, daß der Kupplungsring (47, 51) einen auf der Nabenachse
(1) drehfest geführten, mit dem Gestänge (53)
gekuppelten ersten Ring (51) und einen über
ein Kugellager (49) an dem ersten Ring (51)
drehbar aber axial fest gelagerten, mit den
Achszapfen (37) der Reibräder (35) gelenkig,
insbesondere über Kugelgelenke (45) gekuppelten zweiten Ring (47) umfaßt.

## Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | US-A-4 735 430  (P.TOMKINSON)<br>* Spalte 4, Zeile 60 - Spalte 8, Zeile 48; Figuren 5-8 *<br>- - - | 1,6,8,10 | B 62<br>M 11,12 |
| A | US-A-2 108 082  (J.SHARPE)<br>* Seite 1, Spalte 2, Zeile 9 - Seite 2, Spalte 2, Zeile 27; Figuren 1-4 *<br>- - - | 1 | |
| A | CH-A-2 734 95  (BREVETS AERO-MECANIQUE S.A.)<br>* das ganze Dokument *<br>- - - | 1 | |
| A | GB-A-2 080 452  (J.FRANKLIN)<br>* das ganze Dokument *<br>- - - - - | 1 | |

RECHERCHIERTE
SACHGEBIETE (Int. Cl.5)

B 62 M
F 16 H

Der vorliegende Recherchenbericht wurde für alle Patentansprüche erstellt

| Recherchenort | Abschlußdatum der Recherche | Prüfer |
|---|---|---|
| Den Haag | 19 März 91 | CZAJKOWSKI A.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument